# EUROPÄISCHE PATENTSCHRIFT

(11) **EP 3 685 925 B1**
(45) Veröffentlichungstag und Bekanntmachung des Hinweises auf die Patenterteilung: **26.10.2022**
(21) Anmeldenummer: 18188849.6
(22) Anmeldetag: 14.08.2018
(51) Int. Cl.: B05B 13/00, B05B 12/00

(54) **VERFAHREN UND VORRICHTUNG ZUR SPRITZLACKIERUNG EINES WERKSTÜCKS**
METHOD AND DEVICE FOR SPRAY PAINTING A WORKPIECE
PROCÉDÉ ET DISPOSITIF DE PEINTURE PAR PULVÉRISATION D'UNE PIÈCE À USINER

(43) Veröffentlichungstag der Anmeldung: 29.07.2020
(73) Patentinhaber: pentanova cs GmbH, 71032 Böblingen (DE)
(72) Erfinder: Kirchner, Marc Walter, 69245 Bammental (DE)
(74) Vertreter: Patentanwälte Vomberg & Schart

(56) Entgegenhaltungen:
- EP-A2- 1 745 858
- DE-A1-102008 045 553
- DE-B3-102010 021 716

## Beschreibung

Die vorliegende Erfindung betrifft ein Verfahren und eine Vorrichtung zur Spritzlackierung eines Werkstücks mittels einer Applikationsvorrichtung, wobei das Werkstück mindestens zwei zueinander bewegliche Bauteile besitzt, die zumindest bereichsweise derart zueinander angeordnet sind oder ineinandergreifen, dass in Abhängigkeit der relativen Position der Bauteile zumindest ein Teilbereich eines der Bauteile so verschattet gelagert ist, dass der Teilbereich zur Spritzlackierung durch die Applikationsvorrichtung unzugänglich ist, wobei eines der Bauteile während der Spritzlackierung mittels eines Aktuators derart bewegt wird, dass sich der verschattete Teilbereich des Bauteils so verlagert, dass er zur Spritzlackierung durch die Applikationsvorrichtung zugänglich ist.

Beim Spritzlackieren wird die Oberfläche von Werkstücken mit einem Lack beschichtet. Hierzu wird der Lack, insbesondere ein Korrosionsschutz, mittels einer Applikationsvorrichtung aufgebracht, die beispielsweise als Hochrotationszerstäuber ausgebildet ist und an einem Mehrachsroboter befestigt ist. Bei komplexen Werkstücken, die aus mehreren Bauteilen zusammengesetzt sind, wurden häufig die einzelnen Bauteile spritzlackiert und anschließend zum fertigen Werkstück zusammengesetzt. Insbesondere in der Automobilindustrie ist man jedoch dazu übergegangen, die unlackierten Bauteile zunächst zusammenzusetzen und die bereits zusammengesetzten Werkstücke anschließend zu lackieren.

Bei Werkstücken, die zueinander bewegliche Bauteile aufweisen, ist jedoch zu berücksichtigen, dass manche Bauteile oder zumindest Teilbereiche hiervon nicht spritzlackiert werden sollen oder dürfen. Solche Teilbereiche werden vor der Spritzlackierung maskiert, indem sie durch geeignete Folien oder dergleichen abgedeckt werden.

Ferner können insbesondere bei Werkstücken aus zueinander beweglichen Bauteilen manche Teilbereiche von Bauteilen derart durch anderen Bauteile verdeckt sein, dass diese Teilbereiche zum Spritzlackieren nicht von der Applikationsvorrichtung erreicht werden. Um solche Werkstücke vollständig zu lackieren, muss die Spritzlackierung unterbrochen werden und die betroffenen Bauteile müssen per Hand soweit verlagert werden, bis eine vollständige Lackierung des Werkstücks durch die Applikationsvorrichtung möglich ist. Die Unterbrechung der Spritzlackierung und die Verlagerung der Bauteile erfordert jedoch Zeit und muss regelmäßig von geschulten und mit geeigneter Schutzkleidung bekleideten Personen durchgeführt werden, was mit einem entsprechenden Zeit- und Kostenaufwand verbunden ist.

Die DE 10 2008 045 553 A1 beschreibt eine Lackiereinrichtung zum Lackieren von Bauteilen, insbesondere zur Lackierung von Kraftfahrzeugkarosserien oder deren Teilen, mit einem mehrachsigen Lackierrobotor, der einen Zerstäuber positioniert, einer Robotorsteuerung zur Steuerung des Lackierroboters und mit einem Steuerschrank, der die Robotorsteuerung enthält. Der Steuerschrank bildet eine Tragsäule, die den Lackierroboter mechanisch abstützt. In einem Ausführungsbeispiel ist zusätzlich zu dem Lackierroboter ein Handhabungsroboter vorgesehen, der die Aufgabe hat, Türen oder die Haube der Kraftfahrzeugkarosserien für die anschließende Innenlackierung durch den Lackierroboter zu öffnen. Die genannten Roboter sind in einer Lackierkabine angeordnet, durch welche die Kraftfahrzeugkarosserien von einer Förderrichtung transportiert werden.

Die DE 10 2010 021 716 B3 betrifft eine Lackieranlage zum Lackieren der Radsätze von Schienenfahrzeugen, mit wenigstens einer Lackierkammer, die mit einem Gleis, auf dem der zu lackierende Radsatz verfahrbar ist, und mit einem Lackierroboter versehen ist, bei der ein Gleisabschnitt innerhalb der Lackierkammer auf einem um wenigstens ± 90° oder 270° drehbaren Teller angeordnet ist, der auf dem Teller verlaufende Gleisabschnitt mittig mit einer Unterbrechung versehen, und der Teller mit wenigstens einem Paar von Antriebsrädern versehen ist, das durch die Unterbrechung des Gleisabschnitts hindurch mit der Lauffläche eines Rads oder dem Kranz des Rades in reibschlüssigen Eingriff tritt und so den Radsatz bei dessen Lackierung durch den Lackierroboter in Drehung versetzt.

Die EP 1 745 858 A2 betrifft eine Beschichtungseinrichtung zum Beschichten von Werkstücken wie insbesondere der Anbauteilen von Fahrzeugkarossen oder auch von ganzen Karossen mit mindestens einem Applikationsgerät zur Applikation eines Beschichtungsmittels auf die Werkstücke und mit einer Zuführeinrichtung zur Zuführung der Werkstücke in eine geeignete Beschichtungsposition relativ zu dem Applikationsgerät. Die Zuführeinrichtung weist mindestens einen Handhabungsroboter auf, der die Werkstücke in die Beschichtungsposition bringt und sie bei der Beschichtung relativ zu dem Applikationsgerät bewegt, das hierbei fest stehen oder ebenfalls bewegt werden kann.

Hiervon ausgehend ist die Aufgabe der vorliegenden Erfindung ein Verfahren und eine Vorrichtung zur Spritzlackierung von Werkstücken vorzuschlagen, die eine schnelle, vollständige und kostenschonende Lackierung eines Werkstücks erlaubt. Diese Aufgabe wird durch das Verfahren nach Anspruch 1 sowie die Vorrichtung nach Anspruch 8 gelöst.

Durch die erfindungsgemäße Vorrichtung und durch das erfindungsgemäße Verfahren können auch komplexe Werkstücke aus mehreren Bauteilen in einer Automatikkabine vollständig spritzlackiert werden, die verdeckte oder verschattete Teilbereich aufweisen. Somit ist ein schnelles, vollständiges und dabei kostenschonendes Lackieren komplexer Werkstücke aus beweglichen Bauteilen möglich.

Bevorzugte Ausführungsformen der vorliegenden Erfindung werden nachfolgend und mit Bezug auf die Unteransprüche beschrieben.

Im Rahmen der vorliegenden Erfindung können die betroffenen Bauteile des Werkstücks in jeder beliebigen Weise beweglich zueinander sein. Insbesondere ist vorgesehen, dass die Bauteile drehbeweglich zueinander sind und dass zumindest eines der Bauteile durch den Aktuator gedreht wird bzw. durch den Aktuator drehbar ist.

Unabhängig von der konkreten beweglichen Lagerung der Bauteile ist vorzugsweise vorgesehen, dass der Aktuator eine Kontakteinrichtung besitzt, mit der eine lösbare Verbindung zu dem drehbaren oder verlagerbaren Bauteil des Werkstücks herstellbar ist. Für den Fall eines drehbaren Bauteils ist vorzugsweise vorgesehen, dass das drehbare Bauteil um mindestens 30°, 60°, 90°, 120° oder 180° gedreht wird, so dass alle Bereiche des Bauteils zur Spritzlackierung durch die Applikationsvorrichtung erreichbar sind.

Das vorliegende Verfahren umfasst zur vollständigen Spritzlackierung eines Werkstücks vorzugsweise folgende Verfahrensschritte:
a) teilweises Spritzlackieren des Werkstücks mit der Applikationsvorrichtung,
b) Unterbrechen des Spritzlackierens,
c) Drehen oder Verlagern des Bauteils mit mindestens einem verschatteten Teilbereich, so dass der verdrehte oder verlagerte Teilbereich zur Spritzlackierung durch die Applikationsvorrichtung zugänglich ist,
d) Spritzlackieren des zuvor verschatteten Teilbereiches.

Sofern eine einzige Verdrehung oder Verlagerung des Bauteils noch nicht ausreicht, um das Werkstück vollständig zu lackieren, werden die Verfahrensschritte a) bis d) so lange wiederholt, bis das Werkstück an allen gewünschten Bereichen lackiert ist.

Alternativ zu einer Unterbrechung des Spritzlackierens ist auch eine kontinuierliche Spritzlackierung des Werkstücks mit der Applikationsvorrichtung vorgesehen, wozu das Bauteil gleichzeitig zum Spritzlackieren gedreht oder verlagert wird bis das Werkstück vollständig spritzlackiert ist.

Es wurde bereits darauf hingewiesen, dass sich mit der vorliegenden Vorrichtung und mit dem vorliegenden Verfahren komplexe Werkstücke spritzlackieren lassen, die aus mehreren Bauteilen zusammengesetzt sind und die teilweise beweglich miteinander verbunden sind. Ein solches Werkstück kann insbesondere eine Kraftfahrzeugachse sein, die
- einen Achskörper und
- mindestens einen Bremssattel und
- eine Radaufhängung mit einer Bremsscheibe und einer Radaufnahme mit
mehreren Radbolzen und/oder mehreren Radbolzenaufnahmen aufweist, wobei die Radaufhängung relativ zu dem Achskörper und dem Bremssattel drehbar ist und Teilbereiche der Radaufhängung, insbesondere Teilbereiche der Radaufnahme und/oder der Bremsscheibe in Abhängigkeit von der angularen Position von dem Bremssattel verschattet sind. Derartige Kraftfahrzeugachsen werden zum Spritzlackieren üblicherweise in eine Lackieranlage eingefahren, indem sie an einer geeigneten Transportvorrichtung frei-pendelnd hängen. Der Transport erfolgt dabei schon aus Platzgründen in Richtung der Längsachse der Kraftfahrzeugachse. Um die gesamte Kraftfahrzeugachse mit einer einzigen Applikationsvorrichtung spritzlackieren zu können, wird zunächst die erste in die Lackieranlage einfahrende Seite der Kraftfahrzeugachse mit der daran befindlichen (vorderen) Radaufhängung spritzlackiert. Hierbei wird die Radaufhängung modelabhängig um einen konstanten Winkel in eine Richtung gedreht, beispielsweise in Transportrichtung gesehen nach links. Dabei greift der Aktuator allerdings entgegengesetzt zur Transportrichtung an der Radaufhängung an und dreht die Radaufhängung aus Sicht des Aktuators nach rechts. Nach dem Spritzlackieren des zuvor verschatteten Bereiches bleibt das bewegliche Bauteil in dieser Position und wird nicht in die ursprüngliche Ausgangslage zurückgedreht.

Anschließend erfolgt die Lackierung des unbeweglichen Achskörpers, was auch mit einer einzigen Applikationsvorrichtung unproblematisch ist.

Bei der darauffolgenden Lackierung der (hinteren) Radaufhängung ist die Radaufhängung analog zur vorderen um einen konstanten Winkel in Transportrichtung nach links zu drehen. Da der Aktuator in diesem Fall in Transportrichtung angreift, erfolgt auch aus seiner Sicht eine Drehung der Radaufhängung nach links. Die Bewegungen an der vorderen und hinteren Radaufhängung müssen demzufolge spiegelverkehrt ausgeführt werden. Um diese komplexe Bewegungsabfolge ausführen zu können, ist vorzugsweise vorgesehen, dass ein beidseitiges Drehen der Bauteile mittels des Aktuators möglich ist und dass eine Drehung ohne eine festgelegte Vorzugsrichtung erfolgt. Nur hierdurch kann für die unterschiedlichen Seiten einer Kraftfahrzeugachse dieselbe Applikationsvorrichtung bzw. derselbe Aktuator eingesetzt werden, womit eine zweite Applikationsvorrichtung entbehrlich ist. Die Kraftfahrzeugachsen können daher in einer Lackieranlage mit einer einzigen Applikationsvorrichtung vollständig spritzlackiert werden.

Um Kraftfahrzeugachsen der beschriebenen Art vollständig lackieren zu können, ist die Kontakteinrichtung des Aktuators vorzugsweise ein Finger oder ein Haken, der beim Drehen der Radaufhängung einen Radbolzen hintergreift oder in eine Radbolzenaufnahme einführbar ist.

Alternativ kann die Kontakteinrichtung als Greifer ausgebildet sein, mit dem Bauteile des Werkstücks greifbar sind, so dass die Bauteile verdrehbar und/oder verlagerbar sind. Im Fall einer Kraftfahrzeugachse kann beispielsweise die Bremsscheibe und/oder die Radaufnahme gegriffen und mit dem Greifer gedreht werden. Schließlich kann die Kontakteinrichtung des Aktuators eine Kontaktfläche sein, die zum Verdrehen oder Verlagern der Bauteile eine reibschlüssige Anlage am Bauteil bildet. Die Kontaktfläche kann hierzu ein elastisches Material aufweisen, das eine rutschstabile Anlage am Bauteil bildet.

In allen Ausführungsformen des Aktuators kann die Kontakteinrichtung austauschbare Verschleißelemente aufweisen, die im Verschleißfall abmontiert und durch neue bzw. unverschlissene Elemente ersetzt werden können. Zudem kann die Kontakteinrichtung verstellbar ausgeführt sein.

Zur Durchführung des Verfahrens, bei dem eine Unterbrechung des Spritzlackierens erfolgt, ist der Aktuator unmittelbar an der Applikationsvorrichtung angeordnet. Im einfachsten Fall handelt es sich hierbei um einen Finger oder einen Haken, der seitlich am Gehäuse der Applikationsvorrichtung ausgebildet ist. Hierdurch können die Kosten einer weiteren Bewegungseinheit eingespart werden. Allerdings muss das Spritzlackieren zur Bewegung des Bauteils unterbrochen werden. Konkrete Ausführungsformen der vorliegenden Erfindung werden im Folgenden und anhand der Figuren erläutert. Es zeigen:
- Fig. 1: schematische Darstellung einer Kraftfahrzeugachse in einer Lackieranlage,
- Fig. 2a, b: Detailansichten der Radaufhängung bei der Spritzlackierung mit verschatteten Bereichen,
- Fig. 3a-4b: Detailansichten der Radaufhängung beim Drehen der Radaufnahme und
- Fig. 5a, b: alternative Kontakteinrichtungen eines Aktuators.

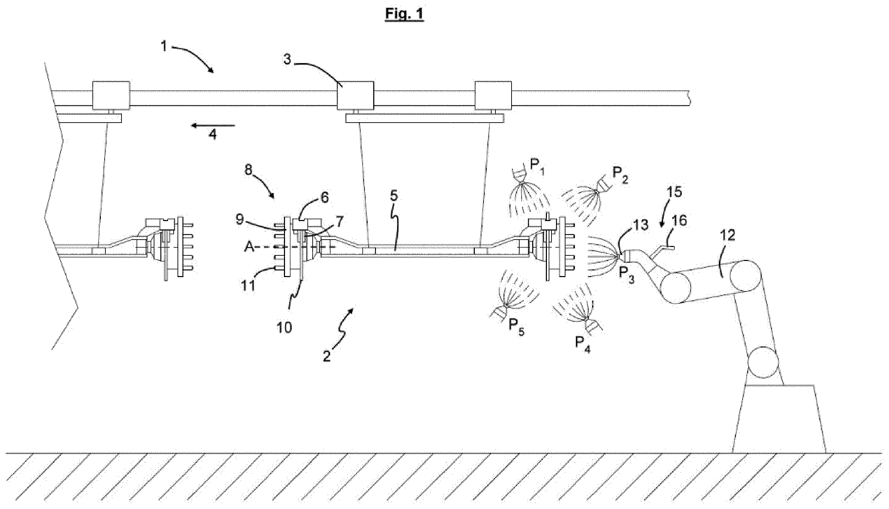

Fig. 1 zeigt eine Lackieranlage 1 zum Spritzlackieren von Kraftfahrzeugachsen 2. Die Kraftfahrzeugachse 2 ist hierzu an einer Transportvorrichtung 3 aufgehängt, die die Kraftfahrzeugachse 2 in Transportrichtung 4 vorzugsweise kontinuierlich bewegt, womit Schwingungen der Kraftfahrzeugachse 2 beim Anhalten und Losfahren vermieden werden. Die Kraftfahrzeugachse 2 besitzt einen Achskörper 5, an dem beidseitig jeweils ein Bremssattel 6 mit Bremsbelägen 7 sowie eine Radaufhängung 8 mit jeweils einer Radaufnahme 9 und Bremsscheiben 10 angeordnet sind. Die Radaufnahme 9 besitzt mehrere Radbolzen 11, die zur späteren Aufnahme eines Rades dienen. Ferner ist die Radaufnahme 9 zusammen mit der Bremsscheibe 10 um die Längsachse A der Kraftfahrzeugachse 2 drehbar gelagert.

Zur Spritzlackierung der Kraftfahrzeugachse 2 ist ein Roboterarm 12 vorgesehen, an dessen Spitze eine Applikationsvorrichtung 13 in Form eines Hochrotationszerstäubers angebracht ist. Die Applikationsvorrichtung 13 kann sich aufgrund der beweglich zueinander angeordneten Glieder des Roboterarms 12 in jeder beliebigen Position ausrichten. In Fig. 1 sind exemplarisch fünf verschiedene Positionen P_{1,...,5} der Applikationsvorrichtung 13 dargestellt.

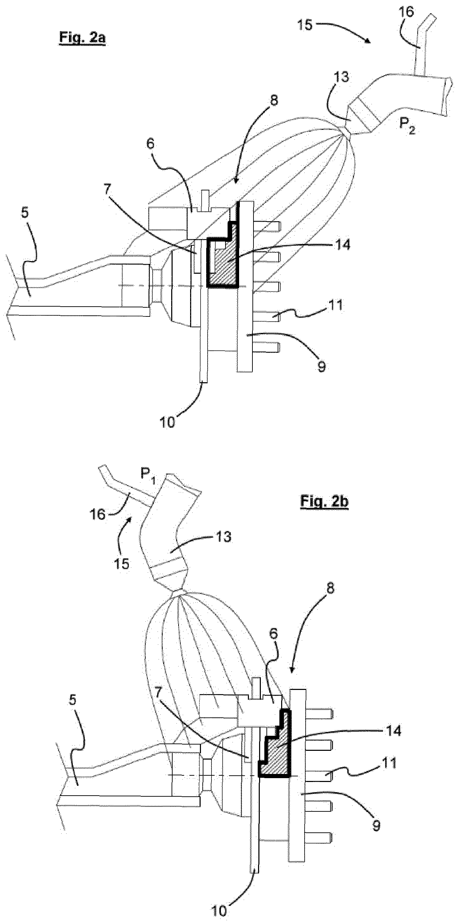

Unabhängig von der vielfältigen Bewegungsmöglichkeit des Roboterarms 12 existieren konstruktionsbedingt Schattenbereiche am Werkstück, die für eine Spritzlackierung mit der Applikationsvorrichtung 13 unzugänglich sind. In Fig. 2a und 2b ist beispielhaft ein solcher Schattenbereich 14 dargestellt, der sich im Wesentlichen zwischen dem Bremssattel 6 und der Radaufnahme 9 befindet. Weder aus der Position P₂ in Fig. 2a noch aus der Position P₁ kann eine einheitliche Spritzlackierung durch die Applikationsvorrichtung 13 erfolgen.

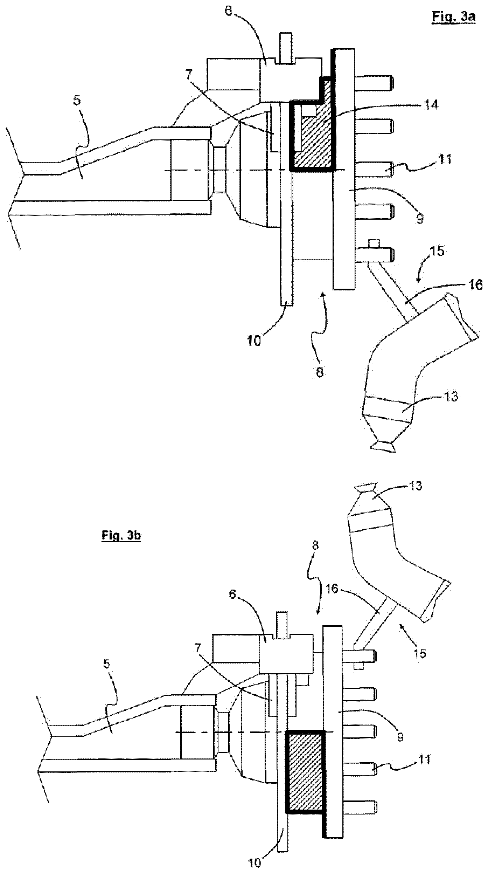

Um eine vollständige und einheitliche Spritzlackierung zu erzeugen, besitzt die erfindungsgemäße Vorrichtung einen Aktuator 15, der in den dargestellten Ausführungsbeispielen eine als Haken 16 ausgebildete Kontakteinrichtung besitzt und der auf der Applikationsvorrichtung 13 befestigt ist. Mittels dieses Hakens 16 kann einer der Radbolzen 11 hintergriffen werden und die Radaufhängung 8 kann zusammen mit der Radaufnahme 9 und der Bremsscheibe 10 um ca. 180° gedreht werden, so dass der von dem Bremssattel 6 verschattete Bereich 14 (Fig. 3a) auf die entgegengesetzte Seite gedreht wird (Fig. 3b). In dieser Position kann sich die Applikationsvorrichtung 13 erneut ausrichten und die zuvor verschatteten und unzugänglichen Teilbereiche des Werkstücks spritzlackieren. Der Zwischenraum zwischen zwei Radbolzen 11 wird dabei durch eine (nicht gezeigte) optische Einrichtung erkannt und ansteuert.

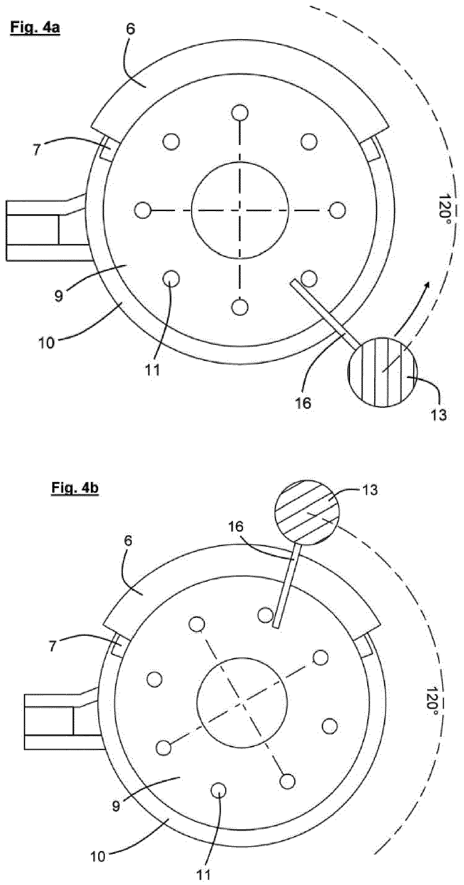

Die Fig. 4a, 4b zeigen die Detailansichten der Fig. 3a und 3b in einer Ansicht parallel zur Längsachse A der Kraftfahrzeugachse 2. Hierin ist deutlich zu erkennen, dass der relativ große Bereich, der von dem Bremssattel 6 verschattet wird, durch eine Drehung der Radaufnahme 9 von ca. 120° aus dem verschatteten Bereich 14 herausgedreht wird, so dass anschließend eine vollständige Spritzlackierung erfolgen kann.

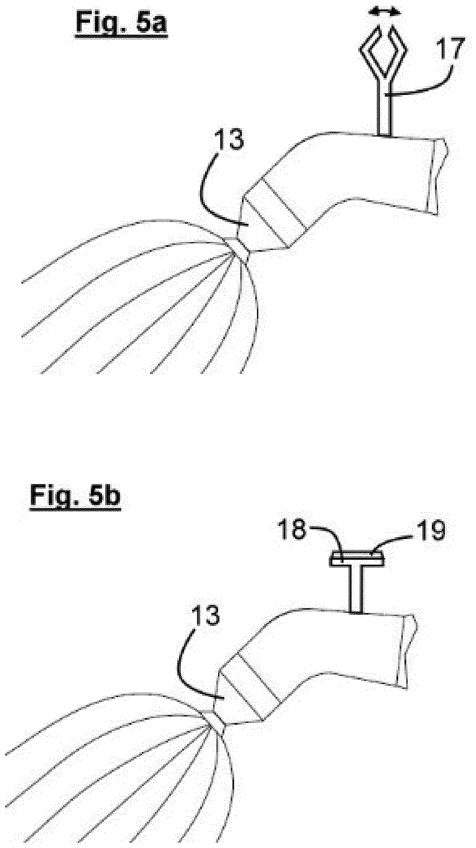

In Fig. 5a ist eine alternative Kontakteinrichtung des Aktuators 15 in Form eines Greifers 17 dargestellt, der zum Drehen der Radaufhängung 8 ein Teil hiervon greifen kann, beispielsweise die Bremsscheibe 10. Fig. 5b zeigt demgegenüber eine Ausführungsform mit einer Kontaktfläche 18, die stirnseitig elastisches Material 19 aufweist, um zum Drehen der Radaufhängung 8 einen reibschlüssigen Kontakt hierzu zu schaffen.

Die Figuren zeigen eine Ausführungsvariante, bei der die Kontakteinrichtung des Aktuators 15 unmittelbar an der Applikationsvorrichtung 13 angeordnet ist, so dass das Spritzlackieren zum Drehen bzw. Verlagern des beweglichen Bauteils unterbrochen werden muss. Alternativ hierzu kann die Kontakteinrichtung auch auf einem separaten Roboterarm angeordnet sein, so dass ein kontinuierliches Spritzlackieren möglich ist.

### Bezugszeichenliste

- 1: Lackieranlage
- 2: Kraftfahrzeugachse
- 3: Transportvorrichtung
- 4: Transportrichtung
- 5: Achskörper
- 6: Bremssattel
- 7: Bremsbeläge
- 8: Radaufhängung
- 9: Radaufnahme
- 10: Bremsscheibe
- 11: Radbolzen
- 12: Roboterarm
- 13: Applikationsvorrichtung
- 14: Verschatteter Bereich
- 15: Aktuator
- 16: Haken
- 17: Greifer
- 18: Kontaktfläche
- 19: Elastisches Material

- A: Längsachse
- Pₙ: Positionen

## Patentansprüche

1. Verfahren zur Spritzlackierung eines Werkstücks mittels einer Applikationsvorrichtung (13), wobei das Werkstück mindestens zwei zueinander bewegliche Bauteile besitzt, die zumindest bereichsweise derart zueinander angeordnet sind oder ineinandergreifen, dass in Abhängigkeit der relativen Position der Bauteile zumindest ein Teilbereich (14) eines der Bauteile so verschattet gelagert ist, dass der Teilbereich (14) zur Spritzlackierung durch die Applikationsvorrichtung (13) unzugänglich ist, wobei eines der Bauteile während der Spritzlackierung mittels eines Aktuators (15) derart bewegt wird, dass sich der verschattete Teilbereich (14) des Bauteils so verlagert, dass er zur Spritzlackierung durch die Applikationsvorrichtung (13) zugänglich ist,
**dadurch gekennzeichnet, dass**
das Werkstück während des Lackierens an einer Transporteinrichtung hängt und dass der Aktuator (15) unmittelbar an der Applikationsvorrichtung (13) angeordnet ist.

2. Verfahren nach Anspruch 1, **dadurch gekennzeichnet, dass** die Bauteile drehbeweglich zueinander sind und dass zumindest eines der Bauteile durch den Aktuator (15) gedreht wird, vorzugsweise um mindestens 30°, 60°, 90°, 120° oder 180°.

3. Verfahren nach einem der Ansprüche 1 oder 2, **dadurch gekennzeichnet, dass** das Werkstück eine Kraftfahrzeugachse (2) ist, die
- einen Achskörper (5),
- mindestens einen Bremssattel (6) und
- eine Radaufhängung (8) mit einer Bremsscheibe (10) und einer Radaufnahme (9) mit mehreren Radbolzen (11) und/oder mehreren Radbolzenaufnahmen aufweist,
wobei die Radaufhängung (8) relativ zu dem Achskörper (5) und dem Bremssattel (6) drehbar ist und die Teilbereiche (14) der Radaufhängung (8), insbesondere Teilbereiche der Radaufnahme (9) und/oder der Bremsscheibe (10) in Abhängigkeit von der angularen Position von dem Bremssattel (6) verschattet sind.

4. Verfahren nach einem der Ansprüche 1 bis 3, **dadurch gekennzeichnet, dass** das bewegliche Bauteil mittels des Aktuators (15) beidseitig verdrehbar ist.

5. Verfahren nach einem der Ansprüche 1 bis 4, **dadurch gekennzeichnet, dass** der Aktuator (15) eine Kontakteinrichtung besitzt, mit der eine lösbare Verbindung zu dem drehbaren oder verlagerbaren Bauteil des Werkstücks hergestellt wird.

6. Verfahren nach einem der Ansprüche 1 bis 5, **gekennzeichnet durch** die Verfahrensschritte:
e) teilweises Spritzlackieren des Werkstücks mit der Applikationsvorrichtung (13),
f) Unterbrechen des Spritzlackierens,
g) Drehen oder Verlagern des Bauteils mit mindestens einem verschatteten Teilbereich (14), so dass der verdrehte oder verlagerte Teilbereich zur Spritzlackierung durch die Applikationsvorrichtung (13) zugänglich ist,
h) Spritzlackieren des zuvor verschatteten Teilbereiches (14) und
i) gegebenenfalls Wiederholung der Verfahrensschritte a) bis d), bis die Spritzlackierung des Werkstücks vollständig ist.

7. Verfahren nach einem der Ansprüche 1 bis 6, **gekennzeichnet durch** folgende Verfahrensschritte:
a) Spritzlackieren des Werkstücks mit der Applikationsvorrichtung (13) und
b) gleichzeitiges Drehen oder Verlagern des Bauteils mit mindestens einem verschatteten Teilbereich bis das Werkstück vollständig spritzlackiert ist.

8. Vorrichtung zur Spritzlackierung eines Werkstücks mittels einer Applikationsvorrichtung (13), wobei das Werkstück mindestens zwei zueinander bewegliche Bauteile besitzt, die zumindest bereichsweise derart zueinander angeordnet sind oder ineinandergreifen, das in Abhängigkeit der relativen Position der Bauteile zumindest ein Teilbereich (14) eines der Bauteile so verschattet ist, dass der Teilbereich (14) zur Spritzlackierung durch die Applikationsvorrichtung (13) unzugänglich ist, mit einem Aktuator (15), der eine Bewegung des Bauteils während der Spritzlackierung erlaubt, so dass der verschattete Teilbereich (14) des Bauteils so verlagerbar ist, dass er zur Spritzlackierung durch die Applikationsvorrichtung (13) zugänglich ist,
**dadurch gekennzeichnet, dass**
der Aktuator (15), der ein Finger, ein Haken (16) oder ein Greifer (17) ist, unmittelbar an der Applikationsvorrichtung (13) angeordnet ist und dass das Werkstück während des Lackierens an einer Transporteinrichtung hängt.

9. Vorrichtung nach Anspruch 8 **dadurch gekennzeichnet, dass** der Aktuator (15) eine Kontakteinrichtung besitzt, mit der eine lösbare Verbindung zu dem drehbaren oder verlagerbaren Bauteil des Werkstücks herstellbar ist.

10. Vorrichtung nach Anspruch 9, **dadurch gekennzeichnet, dass** die Kontakteinrichtung ein Finger oder ein Haken (16) ist, mittels dessen beim Drehen der Radaufhängung (8) einer Kraftfahrzeugachse ein Radbolzen (11) hintergreifbar oder in eine Radbolzenaufnahme einführbar ist.

11. Vorrichtung nach Anspruch 9, **dadurch gekennzeichnet, dass** die Kontakteinrichtung ein Greifer (17) ist, mit dem Bauteile des Werkstücks greifbar sind, so dass die Bauteile verdreh- und/oder verlagerbar sind.

12. Vorrichtung nach Anspruch 9, **dadurch gekennzeichnet, dass** die Kontakteinrichtung eine Kontaktfläche (19) besitzt, die zum Verdrehen oder Verlagern des Bauteils eine reibschlüssige Anlage am Bauteil erlaubt.

## Claims

1. Process for spray painting a workpiece by means of an application device (13), the workpiece having at least two components at least in certain aereas arranged movably one to the other, which are arranged relative to one another or interlock in such a way that, depending on the relative position of the components, at least a partial area (14) of one of the components is located in a shade so that the partial area (14) is inaccessible for spray painting by the application device (13), wherein one of the components is moved during spray painting by means of an actuator (15) in such a way that the shaded partial area (14) of the component is displaced in such a way that it becomes accessible for spray painting by the application device (13), **characterized in that**
the workpiece is suspended from a transport device and that the actuator (15) is arranged directly at the application device (13).

2. Process according to claim 1, **characterized in that** the components arranged rotatably one to the other and that at least one of the components is rotated by the actuator (15), preferably at least 30°, 60°, 90°, 120° or 180°.

3. Process according to one of the claims 1 or 2, **characterized in that** the workpiece is a motor vehicle axle (2) comprising
- an axle body (5),
- at least one brake caliper (6) and
- a wheel suspension (8) with a brake disc (10) and a wheel mount (9) with multiple wheel bolts (11) and/or multiple wheel bolt mounts,
the wheel suspension (8) being rotatable relative to the axle body (5) and the brake caliper (6) and the sections (14) of the wheel suspension (8), in particular partial areas of the wheel mount (9) and/or the brake disc (10) are shaded dependent from the angular position of the brake caliper (6).

4. Process according to one of claims 1 to 3, **characterized in that** the movable component is rotatable on both sides by means of the actuator (15).

5. Process according to one of claims 1 to 4, **characterized in that** the actuator (15) has a contact device with which a detachable connection to the rotatable or movable component of the workpiece is established.

6. Process according to one of claims 1 to 5, **characterized by** the process steps:
e) partial spray painting of the workpiece with the application device (13),
f) interrupting the spray painting,
g) rotating or relocating the component with at least one shaded partial area (14) so that the rotated or relocated partial area is accessible for spray painting by the application device (13),
h) spray painting of the previously shaded partial area (14) and
i) optionally repeating process steps a) to d) until the spray painting of the workpiece is completed.

7. Process according to one of claims 1 to 6, **characterized by** the following method steps:
a) spray painting the workpiece with the application device (13) and
b) simultaneous rotation or relocation of the component with at least one shaded partial area until the workpiece is spray painted completely.

8. Device for spray painting of a workpiece by means of an application device (13), the workpiece having at least two components which are arranged movably one to the other and at least in partial areas arranged relative to one another or interlock in such way that depending on the relative position of the components at least a partial area (14) of one of the components is shaded in such a way that the partial area (14) is inaccessible for spray painting by the application device (13), with an actuator (15) which allows a movement of the component during the spray painting so that the shaded partial area (14) of the component is movable so that it is accessible for spray painting by the application device (13),
**characterized in that**
the actuator (15), which is a finger, a hook (16) or the gripper (17), is arranged directly on the application device (13) and that the workpiece is suspended from a transport device during the spray painting.

9. Device according to claim 8, **characterized in that** the actuator (15) has a contact device, with which a detachable connection to the rotatable or movable component of the workpiece can be established.

10. Device according to claim 9, **characterized in that** the contact device is a finger or a hook (16) by means of which a wheel bolt (11) can be gripped or can be inserted in a wheel bolt mount, when turning the wheel suspension (8) of a motor vehicle axle.

11. Device according to claim 9, **characterized in that** the contact device is a gripper (17) for gripping components of the workpiece so that the components are rotatable and/or displaceable.

12. Device according to claim 9, **characterized in that** the contact device has a contact surface (19) which allows frictional contact with the component in order to rotate or displace it.

## Revendications

1. Procédé de peinture au pistolet d'une pièce à l'aide d'un dispositif d'application (13), dans lequel la pièce comprend au moins deux composants qui sont déplaçables l'un par rapport à l'autre et qui sont disposés l'un par rapport à l'autre ou s'engagent l'un dans l'autre, au moins par zones, de telle sorte que, en fonction de la position relative des composants, au moins une zone partielle (14) de l'un des composants est logée de manière ombragée de telle façon que la zone partielle (14) est inaccessible pour la peinture au pistolet par le dispositif d'application (13), dans lequel l'un des composants est déplacé pendant la peinture au pistolet au moyen d'un actionneur (15) de telle manière que la zone partielle (14) ombragée du composant se déplace de telle sorte qu'elle est accessible pour la peinture au pistolet par le dispositif d'application (13),
**caractérisé par le fait que** la pièce est suspendue à un dispositif de transport pendant la peinture et que l'actionneur (15) est disposé directement sur le dispositif d'application (13).

2. Procédé selon la revendication 1, **caractérisé par le fait que** les composants sont mobiles en rotation les uns par rapport aux autres et que l'un au moins des composants est tourné par l'actionneur (15), de préférence d'au moins 30°, 60°, 90°, 120° ou 180°.

3. Procédé selon l'une quelconque des revendications 1 ou 2, **caractérisé par le fait que** la pièce est un essieu de véhicule automobile (2) qui présente
- un corps d'essieu (5),
- au moins un étrier de frein (6) et
- une suspension de roue (8) avec un disque de frein (10) et un support de roue (9) comprenant une pluralité de boulons de roue (11) et/ou une pluralité de logements de boulon de roue,
dans lequel la suspension de roue (8) peut tourner par rapport au corps d'essieu (5) et à l'étrier de frein (6) et les zones partielles (14) de la suspension de roue (8), en particulier des zones partielles du support de roue (9) et/ou du disque de frein (10) sont ombragés par l'étrier de frein (6) en fonction de la position angulaire.

4. Procédé selon l'une quelconque des revendications 1 à 3, **caractérisé par le fait que** le composant mobile peut être tourné des deux côtés au moyen de l'actionneur (15).

5. Procédé selon l'une quelconque des revendications 1 à 4, **caractérisé par le fait que** l'actionneur (15) comprend un dispositif de contact au moyen duquel est établie une liaison amovible au composant rotatif ou déplaçable de la pièce.

6. Procédé selon l'une quelconque des revendications 1 à 5, **caractérisé par** les étapes de procédé consistant à:
e) peindre partiellement au pistolet la pièce au moyen du dispositif d'application (13),
f) interrompre la peinture au pistolet,
g faire tourner ou déplacer le composant avec au moins une zone partielle (14) ombragée de sorte que la zone partielle tournée ou déplacée soit accessible pour la peinture au pistolet par le dispositif d'application (13),
h) peindre au pistolet la zone partielle (14) précédemment ombragée, et
i) répéter le cas échéant les étapes de procédé a) à d) jusqu'à ce que le revêtement fait par peinture au pistolet de la pièce soit complet.

7. Procédé selon l'une quelconque des revendications 1 à 6, **caractérisé par** les étapes de procédé suivantes consistant à:
a) peindre au pistolet la pièce au moyen du dispositif d'application (13), et
b) faire tourner et déplacer en même temps le composant avec au moins une zone partielle ombragée jusqu'à ce que la pièce soit complètement revêtue par pulvérisation.

8. Dispositif de peinture au pistolet d'une pièce à l'aide d'un dispositif d'application (13), dans lequel la pièce comprend au moins deux composants qui sont déplaçables l'un par rapport à l'autre et qui sont disposés l'un par rapport à l'autre ou s'engagent l'un dans l'autre, au moins par zones, de telle sorte que, en fonction de la position relative des composants, au moins une zone partielle (14) de l'un des composants est ombragée de telle façon que la zone partielle (14) est inaccessible pour la peinture au pistolet par le dispositif d'application (13), comprenant un actionneur (15) qui permet un déplacement du composant durant la peinture au pistolet de sorte que la zone partielle (14) ombragée du composant peut être déplacée de telle sorte qu'elle est accessible pour la peinture au pistolet par le dispositif d'application (13),
**caractérisé par le fait que** l'actionneur qui est un doigt, un crochet (16) ou un préhenseur (17), est disposé directement sur le dispositif d'application (13) et que la pièce est suspendue à un dispositif de transport pendant la peinture.

9. Dispositif selon la revendication 8, **caractérisé par le fait que** l'actionneur (15) comprend un dispositif de contact au moyen duquel peut être établie une liaison amovible au composant rotatif ou déplaçable de la pièce.

10. Dispositif selon la revendication 9, **caractérisé par le fait que** le dispositif de contact est un doigt ou un crochet (16) qui, lors de la rotation de la suspension de roue (8) d'un essieu de véhicule automobile, peut s'engager derrière un boulon de roue (11) ou au moyen duquel ce dernier peut être inséré dans un logement de boulon de roue.

11. Dispositif selon la revendication 9, **caractérisé par le fait que** le dispositif de contact est un préhenseur (17) au moyen duquel des composants de la pièce peuvent être saisis de sorte que les composants peuvent être tournés et/ou déplacés.

12. Dispositif selon la revendication 9, **caractérisé par le fait que** le dispositif de contact présente une surface de contact (19) qui permet un appui par friction sur le composant pour tourner ou déplacer le composant.
